# EUROPÄISCHE PATENTANMELDUNG

(11) **EP 1 504 807 A1**
(43) Veröffentlichungstag der Anmeldung: **09.02.2005**
(21) Anmeldenummer: 03027567.1
(22) Anmeldetag: 01.12.2003
(51) Int. Cl.: B01F 3/04, C02F 3/20

(54) **Vorrichtung zum Belüften von Wasser**

(30) Priorität: 02.12.2002 DE 20218719 U
(71) Anmelder: Gummi-Jäger GmbH, 30625 Hannover (DE)
(72) Erfinder: Die Erfindernennung liegt noch nicht vor
(74) Vertreter: Depmeyer, Jochen

(57) **Zusammenfassung**

Die Neuerung betrifft eine Vorrichtung zum Belüften von Wasser mit ebenen Membranen und mit einem Rückschlagventil in der Luftzuleitung, die verhindert, dass im abgeschalteten Zustand Wasser in die Zuleitung eintreten kann. Das Rückschlagventil ist derart angeordnet, dass es von der der Membran abgewandten Seite in den Rohrstutzen für die Zuluft einsetzbar ist.

## Beschreibung

Die Neuerung betrifft eine Vorrichtung zum Belüften von Wasser mit einer starren, vorzugsweise im wesentlichen ebenen Halterung und einer darauf angeordneten, zum Austritt der Luft fein geschlitzten Membran aus Gummi oder einem gummiähnlichen Kunststoff, wobei die Halterung auf ihrer der Platte abgewandten Seite einen von der Platte überdeckten, als Rohrstutzen ausgebildeten Anschluss zum Zuführen der Luft aufweist.

Einer Vorrichtung dieser Art ist z. B. aus der DE 37 10 910 C2 bekannt. Derartige Vorrichtungen werden z. B. zur Belüftung von Belebtschlammbecken in Wasseraufbereitungsanlagen eingesetzt. Üblicherweise wird in einem Belebtschlammbecken eine größere Anzahl derartiger Vorrichtungen angeordnet, die ein ganzes Belüftungssystem bilden und über Leitungen von einem Kompressor mit vorgespannter Luft versorgt werden können.

Bei einer Vorrichtung der eingangs genannten Art öffnen sich die Schlitze in der Membran, wenn der Vorrichtung vorgespannte Luft zugeführt wird. Die Luft tritt dann in feinen Bläschen in das umgebende Wasser aus. Wenn kein Druck anliegt, schließen sich die Schlitze, was sehr vorteilhaft ist, da so verhindert wird, dass Wasser in die Vorrichtung eindringt. Mit dem Wasser mitgeführte Fremdkörper oder Mikroorganismen könnten die Funktionsfähigkeit des Belüftungssystems stark beeinträchtigen. Wenn die Membran jedoch beschädigt, z. B. gerissen ist, hat das verschmutzte Wasser ungehindert Zutritt zu dem Belüftungssystem. Um das zu verhindern, kann in der Zuleitung zu der Vorrichtung ein Rückschlagventil angeordnet sein, das in der der Luftströmung entgegengesetzten Richtung sperrt. Bisher wurden derartige Rückschlagventile an der Halterung von der Seite her montiert, auf der später die Membran angebracht wurde.

Die Membran ist bei den Vorrichtung der eingangs genannten Art üblicherweise an ihrem Rand mit der Halterung verbunden, z.B. durch eine Vielzahl von Schrauben, die die Membran gegen die Halterung pressen, oder auch durch eine festhaftende Verbindung z. B. mittels Kleben oder Vulkanisation. Ein Lösen der Membran von der Halterung ist daher aufwendig oder sogar unmöglich. Bei den herkömmlichen Vorrichtungen muss das Rückschlagventil daher vor der Membran montiert werden. Eine nachträgliche Ausrüstung von Vorrichtungen der eingangs genannten Art ist aufwendig oder sogar unmöglich.

Der Neuerung liegt die Aufgabe zugrunde, die Vorrichtung der eingangs genannten Art dahingehend zu verbessern, dass die Montage des Rückschlagventils vereinfacht wird und dass eine einfache Nachrüstung von Vorrichtungen, die bisher kein Rückschlagventil hatten, möglich ist.

Diese Aufgabe wird gemäß der Neuerung dadurch gelöst, dass in dem Rohrstutzen ein Rückschlagventil angeordnet ist, das einen in einem Käfig gehaltenen, beweglichen, zum Verschließen des Rohrstutzens dienenden Körper, insb. eine Kugel aufweist, wobei der Käfig von der der Membran abgewandten Seite her in den Rohrstutzen einsetzbar ist.

Die Neuerung hat den Vorteil, dass das Rückschlagventil nunmehr an der Vorrichtung montiert werden kann, ohne dass dazu die Membran entfernt werden muss.

Nach einer vorteilhaften Ausführungsform der Neuerung ist der Käfig an einem Ende mit einem flanschartigen, umlaufenden Vorsprung versehen, der sich an der Stirnseite des Rohrstutzens abstützen kann. Diese Ausführungsform hat den Vorteil, dass das Rückschlagventil dann durch Klemmung zwischen der Stirnseite des Rohrstutzens und dem Ende der Leitung, an die die Vorrichtung angeschlossen ist, gehalten und gegen Verschiebung in Richtung der Längsachse des Rohrstutzens gesichert werden kann.

Nach einer weiteren vorteilhaften Ausführungsform der Erfindung hat der Käfig des Rückschlagventils eine konische Form. Bei den Vorrichtungen der eingangs genannten Art wird die Halterung häufig durch Spritzguss hergestellt und weist, um eine bessere Entformbarkeit zu ermöglichen, eine sich nach unten (d.h. von der Auflage der Membran weg) konisch erweiternde Bohrung auf. Aufgrund der Neuerung kann diese Ausbildung der Bohrung zusätzlich in vorteilhafter Weise zur Aufnahme eines Rückschlagventils mit einem konischen, sich nach oben verjüngenden Käfig genutzt werden. Der Käfig kann sich in Längsrichtung gegen die Wandung der Bohrung abstützen.

Weitere Einzelheiten der Neuerung werden anhand der Zeichnung erläutert, in der Ausführungsbeispiele der Neuerung dargestellt sind. Es zeigen:
- Fig. 1: einen Querschnitt durch einen Teil einer Vorrichtung gemäß der Neuerung und
- Fig. 2: einen Käfig für ein Rückschlagventil einer gegenüber Fig. 1 abgewandelten Vorrichtung.

Die Vorrichtung besteht aus einer Halterung 1, auf der eine Membran 2 angeordnet ist. Von der Vorrichtung ist in der Figur nur der mittlere Teil dargestellt. Die Halterung 1 und die Membran 2 sind an ihren nicht dargestellten Rändern miteinander verbunden. Die Art der Verbindung kann im Hinblick auf die Neuerung in beliebiger Weise, z. B. so, wie es in der DE 37 10 910 C2 beschrieben ist, ausgeführt sein.

In der Mitte ist die Halterung mit einem Rohrstutzen 3 versehen, der ein Außengewinde 4 aufweist. Er kann in ein entsprechend ausgebildetes Rohr einer Zuleitung für die Luft eingeschraubt werden und dient somit gleichzeitig zum Zuführen der Luft zur Vorrichtung als auch zur Halterung der Vorrichtung.

Die Membran 2 ist mit einer Vielzahl feiner Schlitze versehen (nicht dargestellt). Lediglich der mittlere, verstärkt ausgebildete Bereich 5 der Membran, der unmittelbar über dem Rohrstutzen 3 liegt, ist frei von Schlitzen. Über die Schlitze kann die vorgespannte Luft, die der Vorrichtung über den Rohrstutzen 3 zugeführt wird, in das umgebende Wasser entweichen.

In dem Rohrstutzen 3 ist ein Rückschlagventil 6 angeordnet, das eine Kugel 8 aufweist, die sich in einem Käfig 7 befindet. Der Käfig ist zylindrisch und weist vier Stege 9 und einen Boden 17 auf. Über eine Öffnung 10 kann Luft in den Käfig 8 und damit in den Rohrstutzen 3 einströmen und über Lücken 11 zwischen den Stegen 9 wieder ausströmen. Die Strömung erfolgt im Sinne des Pfeils 12. Die Kugel 8 wird durch die Luft angehoben und behindert die Strömung nicht. Der Boden 17 des Käfigs 7 verhindert, dass die Kugel 8 den Rohrstutzen 3 verlässt und zwischen Membran 2 und Halterung 1 gerät.

Bei einer dem Pfeil 12 entgegengesetzten Strömung, wie bei einem Wassereinbruch infolge einer beschädigten Membran 2, wird die Kugel 8 dagegen nach unten gedrückt und verschließt die Öffnung 10, so dass das Wasser nicht in das Leitungssystem eindringen kann. Bei einer derartig ausgebildeten Vorrichtung führt ein Riss in der Membran zwar zum Ausfall des entsprechenden Belüfters, Schäden an dem gesamten System können jedoch vermieden werden.

Wichtig ist nun, dass das Rückschlagventil von unten, d.h. von der der Membran 2 abgewandten Seite her in den Rohrstutzen 3 eingesetzt ist. Der Käfig 7 weist einen umlaufenden Vorsprung 13 auf, dessen Durchmesser größer ist als der Innendurchmesser des Rohrstutzens 3, so dass der Käfig sich auf der Unterseite 14 des Rohrstutzens 3 abstützen kann. Das Rückschlagventil 6 kann somit zwischen dem Rohrstutzen 3 und dem Ende der Zuleitung, an die die Vorrichtung angeschlossen ist, gehalten werden. Am Außenumfang des Käfigs 7 ist ein Dichtungsring 15 angeordnet.

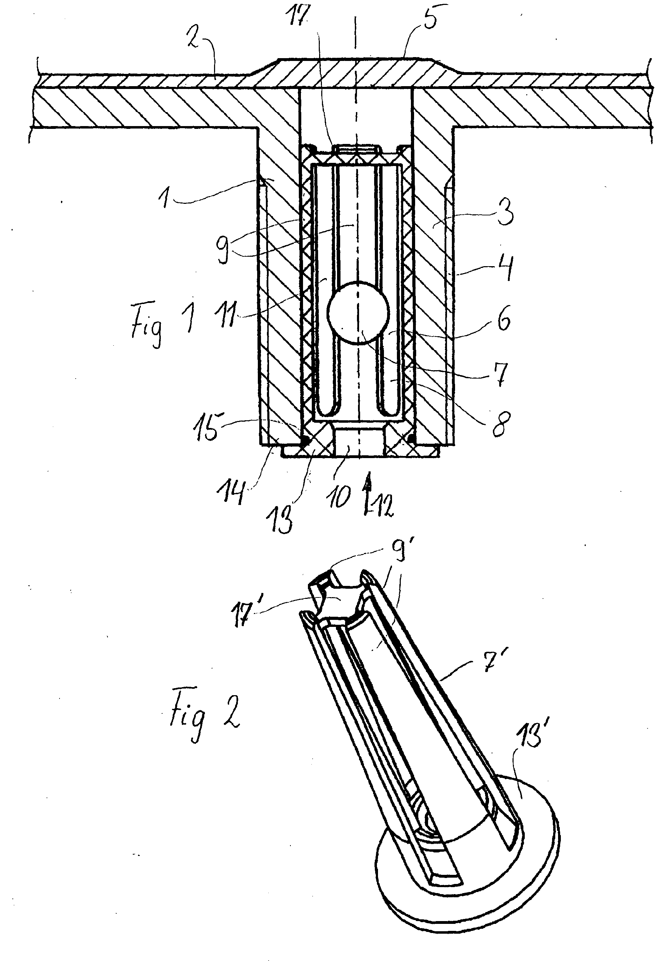

Der Käfig 7', der in Fig. 2 dargestellt ist, unterscheidet sich von dem gemäß Fig. 1 dadurch, dass er die Form eines Kegelstumpfes hat. Er weist Stege 9', einen Boden 17' sowie einen umlaufenden Vorsprung 13' auf. Der Käfig 7' kann in Rohrstutzen mit konischer Bohrung eingesetzt werden. Der Rohrstutzen kann u. a. aus fertigungstechnischen Gründen, nämlich wegen der besseren Entformbarkeit, mit einer konischen, sich nach unten hin erweiternden Bohrung versehen sein. Nach einer weiteren Fortbildung der Neuerung kann bei einer konischen Ausbildung von Käfig 7' und Bohrung der umlaufende Vorsprung 13' entfallen, da sich der Käfig in Richtung nach oben, d.h. auf die Membran zu, gegen die Bohrung abstützen kann.

## Patentansprüche

1. Vorrichtung zum Belüften von Wasser mit einer starren, vorzugsweise im wesentlichen ebenen Halterung und einer darauf angeordneten, zum Austritt der Luft fein geschlitzten Membran aus Gummi oder einem gummiähnlichen Kunststoff, wobei die Halterung auf ihrer der Platte abgewandten Seite einen von der Platte überdeckten, als Rohrstutzen ausgebildeten Anschluss zum Zuführen der Luft aufweist, **dadurch gekennzeichnet, dass** in dem Rohrstutzen (3) ein Rückschlagventil (6) angeordnet ist, das einen in einem Käfig (7) gehaltenen, beweglichen, zum Verschließen des Rohrstutzens dienenden Körper, insb. eine Kugel (8) aufweist, wobei der Käfig (7) von der Membran (2) abgewandten Seite her in den Rohrstutzen (3) einsetzbar ist.

2. Vorrichtung nach Anspruch 1, **dadurch gekennzeichnet, dass** der Käfig (7) an einem Ende einen umlaufenden Vorsprung (13) aufweist.

3. Vorrichtung nach Anspruch 1, **dadurch gekennzeichnet, dass** der Käfig (7') eine konische Form hat.

4. Vorrichtung nach Anspruch 2 und 3, **dadurch gekennzeichnet, dass** der umlaufende Vorsprung (13') an dem Ende des Käfigs, dass den größeren Durchmesser aufweist, angeordnet ist.

5. Vorrichtung nach Anspruch 1, **dadurch gekennzeichnet, dass** der Käfig (7, 7') vier Stege (9, 9') aufweist.

6. Vorrichtung nach Anspruch 1, **dadurch gekennzeichnet, dass** zwischen Rohrstutzen (3) und Käfig (7) eine Dichtung (15) angeordnet ist.
